(19) Europäisches Patentamt
European Patent Office
Office européen des brevets

(11) Veröffentlichungsnummer: **0 008 413**
**A1**

(12) **EUROPÄISCHE PATENTANMELDUNG**

(21) Anmeldenummer: **79102878.0**

(22) Anmeldetag: **09.08.79**

(51) Int. Cl.³: **C 01 G 49/00**

(30) Priorität: **14.08.78 DE 2835542**

(43) Veröffentlichungstag der Anmeldung:
**05.03.80 Patentblatt 80/5**

(84) Benannte Vertragsstaaten:
**AT BE CH DE FR GB IT LU NL SE**

(71) Anmelder: **RIEDEL-DE HAEN AKTIENGESELLSCHAFT**
**Wunstorfer Strasse 40**
**D-3016 Seelze 1(DE)**

(72) Erfinder: **Hirschberg, Rudolf, Dr.**
**Schillerstrasse 13**
**D-3052 Bad Nenndorf(DE)**

(72) Erfinder: **Schönfeld, Bernd, Dr.**
**Steinbrink 23**
**D-3052 Bad Nenndorf(DE)**

(74) Vertreter: **Meyer-Dulheuer, Karl-Hermann, Dr. et al,**
**HOECHST Aktiengesellschaft Zentrale Patentabteilung**
**Postfach 80 03 20**
**D-6230 Frankfurt/Main 80(DE)**

(54) **Verfahren zur Herstellung von wasserfreien Alkalichloroferraten (II,III) und ihre Verwendung.**

(57) Alkalichloroferrate(II,III) sind Verbindungen aus dem System Alkalichlorid/Eisen(II) chlorid/Eisen (III) chlorid. Sie werden hergestellt durch Zusammenschmelzen von Alkalichlorid mit wasserfreiem Eisen (III)chlorid und Eisenpulver. Statt eines einzigen Alkalichlorids kann dabei auch ein Gemisch mehrerer Alkalichloride eingesetzt werden. Die Produkte finden Anwendung bei der Färbung von keramischem Material.

EP 0 008 413 A1

Croydon Printing Company Ltd

RIEDEL-DE HAEN AG/HOE 78/D 002 Dr.EG/cr

Verfahren zur Herstellung von wasserfreien Alkalichloroferraten(II,III) und ihre Verwendung

Die Erfindung betrifft ein Verfahren zur Herstellung von wasserfreien Alkalichloroferraten(II,III) und ihre Verwendung.

Alkalichloroferrate(II,III) sind Verbindungen aus dem System Alkalichlorid /Eisen(II)chlorid/ Eisen(III)chlorid. Alkalichloroferrate(II), z.B. $K_2FeCl_4$ und $KFeCl_3$, sind bekannt. Sie lassen sich durch Zusammenschmelzen der entsprechenden Menge Alkalichlorid mit wasserfreiem Eisen(II)-chlorid herstellen (vgl. z.B. J.Amer.Chem.Soc.79 (1957), Seite 6149). Wasserfreies Eisen(II)chlorid ist jedoch nur schwer zugänglich und stellt somit einen kostspieligen Ausgangsstoff dar. Für technische Einsatzzwecke, z.B. in der Ziegel- und Tonwarenindustrie, werden jedoch größere Mengen preisgünstig einstehender Produkte benötigt. Diese sind auf dem angegebenen Weg nicht zu erhalten.

Das leichter zugängliche Tetrahydrat des Eisen(II)chlorids kann zur Herstellung der Alkalichloroferrate(II) nicht benutzt werden, da beim Zusammenschmelzen mit Alkalichloriden Oxichloride entstehen. Es ist aus demselben Grunde auch nicht möglich, wasserfreie Alkalichloroferrate(II) auf naßchemischem Weg, z.B. über die Trocknung des an sich bekannten Kaliumtetrachloroferrat(II)-dihydrats, herzustellen.

Die der Erfindung zugrundeliegende Aufgabe bestand daher darin, wasserfreies Alkalichloroferrat(II,III), insbesondere Alkalichloroferrat(II), auf einfachem und wirtschaftlichem Weg herzustellen.

Diese Aufgabe wird dadurch gelöst, daß Alkalichloride oder Ammoniumchlorid mit wasserfreiem Eisen(III) chlorid und Eisenpulver in dem gewünschten stöchiometrischen Verhältnis zusammen aufgeschmolzen werden. Das resultierende Alkalichloroferrat(II,III) entspricht der Formel $A_xFe^{++}{}_yFe^{+++}{}_zCl_{x+2y+3z}$, wobei A ein Alkalimetallion oder ein Ammoniumion ist, x eine Zahl von 1 bis 10, y eine Zahl von Null bis 1 und z eine Zahl von Null bis 1 ist und y und z nicht gleichzeitig Null sind.

Als Alkalichloride kommen vorzugsweise Natrium- und/oder Kaliumchlorid in Betracht. Im Prinzip kann das erfindungsgemäße Verfahren auch mit Lithium-, Caesium- oder Rubidiumchlorid durchgeführt werden.

Eisen(III)chlorid ist in wasserfreier Form durch Chlorierung von Eisen leicht zugänglich.

Bei der Durchführung des erfindungsgemäßen Verfahrens ist es vorteilhaft, Alkalichloride mit Eisen(III)-chlorid zu mischen, das Gemisch bis zur Schmelze zu erhitzen und danach das Eisenpulver zuzugeben. Es kann jedoch auch von vornherein ein Gemenge der 3 Komponenten verwandt werden. Beispielsweise erhält man Kaliumtetrachloroferrat(II), indem man ein Gemenge von Kaliumchlorid, Eisen(III)chlorid und Eisenpulver in praktisch stöchiometrischen Mengen zusammenschmilzt.

Die bei der Herstellung der Alkalichloroferrate(II) nach dem erfindungsgemäßen Verfahren zur Anwendung kommenden Temperaturen sollen so hoch gewählt werden, daß nach Ende des Schmelzvorganges eine homogene Schmelze vorliegt. Vorzugsweise werden Temperaturen von 400 bis 700°C angewendet.

Nach dem erfindungsgemäßen Verfahren können die aus der Literatur bekannten Alkalieisenchloride, z.B. $K_2FeCl_4$,

$KFeCl_3$, $NaFeCl_3$, $Na_2FeCl_4$ und $NaK_3FeCl_6$, hergestellt werden.

Es können jedoch auch Gemische dieser Verbindungen hergestellt werden, indem man das Mengenverhältnis der Ausgangsstoffe Alkalichlorid, Eisen(III)chlorid und Eisenpulver ändert. Zum Beispiel kann ein Gemisch der formalen Zusammensetzung $KFeCl_3 \cdot K_2FeCl_4$ dadurch hergestellt werden, daß man für die Komponenten Kaliumchlorid,Eisen(III)-chlorid und Eisenpulver ein molares Mengenverhältnis von 9 : 4 : 2 wählt.

Nach dem erfindungsgemäßen Verfahren ist es ferner möglich, Alkalieisenchloride herzustellen, welche überschüssiges Alkalichlorid enthalten, z.B. der formalen Zusammensetzung $K_2FeCl_4 \cdot 2KCl$. Hierzu geht man nach dem Verfahren der Erfindung so vor, daß man für das Ausgangsgemisch von KCl, $FeCl_3$ und Eisenpulver ein molares Mengenverhältnis von 12 : 2 : 1 wählt. Man kann aber auch zunächst eine Schmelze der Zusammensetzung $K_2FeCl_4$ herstellen und in diese die benötigte Menge Kaliumchlorid eintragen.

Es ist ferner möglich, gemischte Alkalieisenchloride, z.B. solche der Formel $NaKFeCl_4$, herzustellen. Zu diesem Zweck verwendet man als Ausgangsgemisch z.B. ein Gemenge von 3 Mol KCl, 3 Mol NaCl, 2 Mol $FeCl_3$ und 1 Mol Eisenpulver. Auf analoge Weise läßt sich auch $NaK_3FeCl_6$ herstellen.

Nach dem Verfahren der Erfindung können auch Alkalieisenchloride hergestellt werden, in welchen Eisen gleichzeitig in zwei- und dreiwertiger Form anwesend ist. Hierzu muß die Menge des zur Reduktion eingesetzten Eisens entsprechend verringert werden. Man kann z.B. Produkte herstellen,

welche die Zusammensetzung $KFeCl_3 \cdot KFeCl_4$ besitzen. Hierfür benutzt man ein Ausgangsgemisch, welches z.B. aus 6 Mol KCl, 5 Mol $FeCl_3$ und 1 Mol Eisenpulver besteht.

Die bisher erwähnten Verbindungen stellen zumeist einheitlich kristallisierende Verbindungen dar. Es ist jedoch nach dem erfindungsgemäßen Verfahren auch möglich, heterogen kristallisierte Gemische von verschiedenen Alkalichloroferraten(II,III) herzustellen, indem man die entsprechenden Mengen Alkalichlorid, Eisen(III)chlorid und Eisenpulver zusammenschmilzt. Die erhaltene Zusammensetzung läßt sich aus der allgemeinen Formel II errechnen, in der ACl für Alkalichlorid steht:

$$xACl + Y\ FeCl_3 + z\ Fe \rightarrow x\ ACl + (y-2z)\ FeCl_3 + 3\ z\ FeCl_2 \quad (II)$$

Durch Umformung erhält man daraus die allgemeine Formel III, aus der sich errechnen läßt, welche Anteile der Ausgangsstoffe eingesetzt werden müssen, um ein Endprodukt vorgegebener Zusammensetzung zu erhalten:

$$x\ ACl + y\ FeCl_3 + z\ FeCl_2 \leftarrow x\ ACl + (y + \frac{2}{3}z)\ FeCl_3 + \frac{1}{3}z\ Fe \quad (III)$$

Die Herstellung von Alkalichloroferraten(II,III) nach dem erfindungsgemäßen Verfahren kann technisch in vorteilhafter Weise in eisernen Gefäßen erfolgen. Überraschenderweise hat sich herausgestellt, daß der Angriff der Schmelze auf die Wandung der Gefäße bei Anwesenheit von Eisenpulver verhältnismäßig gering ist.

Nach Durchführung der Schmelzreaktion kann man die Schmelze z.B. in dem Reaktionsgefäß erstarren lassen. Da sie sich bei der Abkühlung zusammenzieht, kann sie nach dem Erstarren leicht aus dem Gefäß entfernt und nach Bedarf

zerkleinert werden, z.B. durch Mahlen. Die Schmelze kann jedoch auch aus dem Reaktionsgefäß abgezogen und z.B. mit Hilfe einer Kühlwalze oder Kühlschnecke in an sich bekannter Weise in die feste Form überführt werden.

Das Verfahren gemäß der Erfindung stellt einen vorteilhaften Weg dar, um die bisher schwer zugänglichen Alkalichloroferrate(II) technisch in großem Maße und unter Verwendung von billigen Rohstoffen herzustellen. Die auf diese Weise erzeugten Produkte werden insbesondere bei der Färbung von keramischen Körpern durch Auftragen vor dem Brennen oder durch Zugabe während des Brennens derselben verwendet.

An den nachfolgenden Beispielen wird das Verfahren gemäß der Erfindung im einzelnen erläutert.

Beispiel 1

In einen Eisenkessel von 200 l Inhalt wird ein Gemenge aus 37,5 kg (0,5 kmol) Kaliumchlorid, 54 kg (0,333 kmol) Eisen(III)chlorid wasserfrei und 9,3 kg (0,167 kmol) Eisenpulver eingetragen. Man erhitzt den Behälterinhalt durch Außenheizung im Laufe von 1 Stunde auf etwa 400°C, wobei sich eine homogene Schmelze bildet. Danach wird der Behälterinhalt einige Male umgerührt, um die Reaktion zu vervollständigen. Nun wird die Heizung abgestellt und der Behälterinhalt auskühlen gelassen. Die abgekühlte Schmelze bildet eine graue, kristalline Masse, die sich leicht aus dem Behälter entfernen läßt. Sie hat praktisch die stöchiometrische Zusammensetzung $KFeCl_3$. Die Ausbeute beträgt 100 kg (0,497 kmol).

Beispiel 2

Es wird wie in Beispiel 1 verfahren, jedoch wird die Zusammensetzung des aufzuschmelzenden Gemenges so geändert, daß ein Gemisch aus 75 kg (1 kmol) Kaliumchlorid, 54 kg (0,333 kmol) Eisen(III)chlorid wasserfrei und 9,3 kg (0,167 kmol) Eisenpulver verwandt wird. Nach Durchführung der Reaktion erhält man einen erstarrten Schmelzkuchen von 136 kg (0,493 kmol), der praktisch die stöchiometrische Zusammensetzung $K_2FeCl_4$ hat.

Beispiel 3

Es wird wie in Beispiel 1 verfahren, jedoch wird die Zusammensetzung des aufzuschmelzenden Gemenges so geändert, daß ein Gemisch aus 56,3 kg (0,75 kmol) Kaliumchlorid, 54 kg (0,333 kmol) Eisen(III)chlorid und 9,3 kg (0,167 kmol) Eisenpulver verwandt wird. Nach Durchführung der Reaktion erhält man einen erstarrten Schmelzkuchen von 118 kg eines Produktes, welches die formale Zusammensetzung $K_{1,5}FeCl_{3,5}$ bzw. $K_2FeCl_4 \cdot KFeCl_3$ besitzt (0,247 kmol).

Beispiel 4

Es wird wie in Beispiel 1 verfahren, jedoch wird die Zusammensetzung des aufzuschmelzenden Gemenges so geändert, daß ein Gemisch aus 150 kg (2 kmol) Kaliumchlorid, 54 kg (0,333 kmol) Eisen(III)chlorid wasserfrei und 9,3 kg (0,167 kmol) Eisenpulver verwandt wird. Um eine homogene Schmelze zu erhalten, wird die Temperatur in diesem Fall bis auf 700°C gesteigert. Nach Durchführung der Reaktion erhält man einen erstarrten Schmelzkuchen von 212 kg, der die formale Zusammensetzung $K_4FeCl_6$ bzw. $K_2FeCl_4 \cdot 2KCl$ besitzt (0,49 kmol).

Beispiel 5

Zur Herstellung eines Produktes, das gleichzeitig zwei- und dreiwertiges Eisen enthält, werden 35,1 kg (0,6 kmol) Natriumchlorid, 81,1 kg (0,5 kmol) Eisen(III)chlorid wasserfrei und 5,58 kg (0,1 kmol) Eisenpulver bei einer Temperatur von 500°C aufgeschmolzen. Nach Durchführung der Reaktion und Abkühlen des Reaktionsproduktes erhält man ca. 120 kg (0,296 kmol) eines Produktes der Zusammensetzung $NaFeCl_3 \cdot NaFeCl_4$.

PATENTANSPRÜCHE

1. Verfahren zur Herstellung von Alkalichloroferraten-(II,III) der Formel I

$$A_xFe^{++}_yFe^{+++}_zCl_{x+2y+3z} \qquad (I)$$

worin A ein Alkalimetallion oder ein Ammoniumion ist, x eine Zahl von 1 bis 10, y eine Zahl von Null bis 1 und z eine Zahl von Null bis 1 ist und y und z nicht gleichzeitig Null sind, dadurch gekennzeichnet, daß man ein Alkalichlorid oder Ammoniumchlorid, wasserfreies Eisen(III)-chlorid und Eisenpulver in dem gewünschten stöchiometrischen Verhältnis zusammenschmilzt.

2. Verfahren nach Anspruch 1, dadurch gekennzeichnet, daß statt eines Alkalichlorids ein Gemisch mehrerer Alkalichloride verwandt wird.

3. Verwendung von Salzen nach Anspruch 1 oder 2 zur Färbung von keramischen Produkten.

0008413

Europäisches Patentamt

# EUROPÄISCHER RECHERCHENBERICHT

Nummer der Anmeldung

EP 79 102 878.0

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| X | Chemical Abstracts Band 76, Nr. 24, 12. Juni 1972<br>Columbus, Ohio, USA<br>M.V. SMIRNOV et al. "Thermodynamics of reactions of ferrous and ferric chlorides in a medium of fused chlorides of alkali metals".<br>Seite 391, Spalte 2, Abstract Nr. 159118k<br>& Zh. Prikl. Khim. (Leningrad) Band 45, Nr. 2, 1972<br>Seiten 423 bis 425 (Russ)<br>-- | 1,2 | C 01 G 49/00 |
| | | | RECHERCHIERTE SACHGEBIETE (Int. Cl.³) |
| A | CHEMISCHES ZENTRALBLATT, Band 129, Nr. 16, 1958<br>Weinheim/Bergstraße<br>H.L. PINCH et al. "Thermische Analyse des Systems Eisen (II) chlorid-Kaliumchlorid"<br>Seite 4427 | | C 01 G 49/00<br>C 04 B 33/14<br>C 04 B 41/00 |
| D | & J. Amer. Chem. Soc., Band 79, 5.Dezember 1957<br>Seiten 6149 bis 6150<br>--<br><br>./... | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 15-11-1979 | KESTEN |

Europäisches Patentamt

# EUROPÄISCHER RECHERCHENBERICHT

Nummer der Anmeldung

EP 79 102 878.0

- Seite 2 -

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A | GMELINS HANDBUCH DER ANORGANISCHEN CHEMIE<br>8. Auflage, Band Fe [B],<br>„Verhalten gegen Metalle"<br>1959, VERLAG CHEMIE, Weinheim/Bergstr.,<br>Seite 236<br>-- | | |
| A | US - A - 2 762 700 (R.J. BROOKS)<br>* Ansprüche 1 bis 3 *<br>-- | | RECHERCHIERTE SACHGEBIETE (Int. Cl.3) |
| A | DE - A - 2 110 611 (WENDELL)<br>-- | | |
| A | DE - B - 1 195 285 (BASF)<br>---- | | |